# EUROPÄISCHE PATENTSCHRIFT

(11) **EP 2 121 400 B1**
(45) Veröffentlichungstag und Bekanntmachung des Hinweises auf die Patenterteilung: **06.04.2011**
(21) Anmeldenummer: 08701346.2
(22) Anmeldetag: 09.01.2008
(51) Int. Cl.: B60T 13/66

(54) **SICHERHEITSBREMSE MIT RUCKBEGRENZUNG**
JERK-LIMITED SAFETY BRAKE
FREIN DE SÉCURITÉ À LIMITATION DES À-COUPS

(30) Priorität: 24.01.2007 DE 102007004429
(43) Veröffentlichungstag der Anmeldung: 25.11.2009
(73) Patentinhaber: Siemens Aktiengesellschaft, 80333 München (DE)
(72) Erfinder: HÖRMANSEDER, Markus, A-4770 Andorf (AT)
(86) Internationale Anmeldenummer: PCT/EP2008/050182
(87) Internationale Veröffentlichungsnummer: WO 2008/090020

(56) Entgegenhaltungen:
- EP-A- 0 038 956
- EP-A- 0 865 959
- DE-A1- 4 434 328
- DE-A1- 19 703 688

## Beschreibung

Die Erfindung betrifft eine Bremseinrichtung mit einer Betriebsbremse zum Abbremsen eines Schienenfahrzeuges im Normalbetrieb und einer Sicherheitsbremse zum Abbremsen des Schienenfahrzeuges bei Ausfall der Betriebsbremse, wobei eine mit der Betriebsbremse verbundene Steuerungseinheit eine Ruckbegrenzung bereitstellt.

Die Erfindung betrifft ferner ein Verfahren zum Bremsen eines Schienenfahrzeuges, bei dem der Ausfall einer Betriebsbremse von einer Steuerungseinheit festgestellt wird und eine Sicherheitsbremse anschließend eine Sicherheitsbremsung durchgeführt.

Eine solche Bremseinrichtung und ein solches Verfahren sind aus der DE 10 2004 041 672 A1 bereits bekannt. Die dort beschriebene Bremseinrichtung umfasst eine Betriebsbremse, die zum Abbremsen eines Schienenfahrzeuges im Normalbetrieb vorgesehen ist. Die Betriebsbremse stellt eine Ruckbegrenzung bereit. Diese Komforteigenschaft wird durch eine zweckmäßige Auslegung einer Steuer- und Regeleinrichtung ermöglicht, die auf ein Stellglied zugreift, das den eigentlichen Bremsvorgang in Gang setzt. Im Fehlerfall öffnet sich eine Sicherheitsschleife, woraufhin eine Notbremssteuereinrichtung den Zustand der Betriebsbremse überprüft. Ist die Betriebsbremse trotz des Fehlers einsatzbereit, löst die Notbremssteuereinrichtung eine Sicherheitsbremsung mittels der Betriebsbremse aus. Bei Ausfall der Betriebsbremse, greift die Notbremssteuerung hingegen selbst auf das Stellglied zu, so dass unabhängig von der Betriebsbremse eine Sicherheitsbremsung eingeleitet wird. Die vorbekannte Bremseinrichtung stellt bei Ausfall der Betriebsbremse keine Ruckbegrenzung mehr bereit.

Aufgabe der Erfindung ist es, eine Bremseinrichtung der eingangs genannten Art für Schienenfahrzeuge mit einer verbesserten Komforteigenschaft bereitzustellen.

Ausgehend von der eingangs genannten Bremseinrichtung löst die Erfindung die Aufgabe dadurch, dass die Steuerungseinheit mit der Sicherheitsbremse so gekoppelt ist, dass auch bei einem durch die Sicherheitsbremse ausgelösten Abbremsen eine Ruckbegrenzung bereitgestellt ist.

Ausgehend von dem eingangs genannten Verfahren löst die Erfindung die Aufgabe dadurch, dass die Steuerungseinheit auch bei der Sicherheitsbremsung eine Ruckbegrenzung bereitgestellt.

Erfindungsgemäß ist die Steuerungseinheit mit Bauteilen der Sicherheitsbremse verbunden und so eingerichtet, dass auch bei Ausfall der Betriebsbremse ein Ruck zu Beginn der Sicherheitsbremsung und an deren Ende weitestgehend vermieden wird. Der Fahrkomfort im Fahrzeug bleibt somit auch bei Sicherheitsbremsungen erhalten. Die Steuerungseinheit umfasst beispielsweise eine oder mehrere elektronische Steuereinheiten in Gestalt von programmierbaren Rechnern einschließlich der auf diesen Rechnern ablaufenden Software. Durch das Ansteuern von elektronisch ansprechbaren Ventilen der Sicherheitsbremse und/oder der Betriebsbremse ist ein pneumatischer oder hydraulischer Druck in einem Stellglied regelbar, wobei das Stellglied auch bei der Sicherheitsbremsung die notwendige Bremskraft erzeugt. Abweichend hiervon ist jedoch auch eine rein pneumatische Steuerungseinheit im Rahmen der Erfindung möglich.

Zweckmäßigerweise ist die Steuerungseinheit mit einem Gleitschutzventil verbunden, wobei die Ruckbegrenzung mittels des Gleitschutzventils bereitgestellt ist. Die Steuerungseinheit umfasst gemäß dieser Ausgestaltung der Erfindung auch eine Gleitschutzsteuerung, die mittels des oder der Gleitschutzventile einen Radschlupf vermeidet. Die Gleitschutzventile sind bei handelsüblichen Fahrzeugen in der Regel ohnehin vorhanden, so dass eine kostengünstige Variante der Erfindung bereitgestellt ist. Die Gleitschutzventile sind für die Ruckbegrenzung so anzusteuern, dass ein zu langes Entlüften von als Stellglieder wirkenden Bremszylindern vermieden ist. So verstößt beispielsweise ein über 10 Sekunden dauerndes Entlüften der Bremszylinder mit einem Verlust der Bremskraft im Gefolge gegen gängige Normen im Bereich des Schienenverkehrs. Dies ist im Rahmen der Erfindung durch eine Ansteuerung des oder der Gleitschutzventile zu berücksichtigen, die eine Ruckbegrenzung bereitstellt, eine Entlüftung der Bremszylinder über einen vorgegebenen Zeitraum hinaus jedoch vermeidet.

Vorteilhafterweise umfasst die Bremseinrichtung einen mit einem Fluid befüllbaren Vorratsbehälter, der mittels einer Druckleitung mit einem Bremszylinder zum Andrücken von Bremsbelägen an eine Bremsfläche kommuniziert, die drehfest mit einer Radachse des Fahrzeuges verbunden ist, ein mit der Druckleitung und mit einer Steuerungseinheit verbundenes Bremsventil zum Erzeugen eines von der Steuerungseinheit vorgegebenen Bremsdruckes und ein mit der Steuerungseinheit verbundenen Notbremsventil, wobei das Gleitschutzventil zwischen dem Notbremsventil und dem Bremszylinder angeordnet ist. Mit anderen Worten ist das Gleitschutzventil dem Notbremsventil nachgeschaltet. Ist beispielsweise das Bremsventil fehlerhaft, kommt es zur Auslösung eines Bremsvorganges durch das Notbremsventil. Das Notbremsventil kommuniziert mit wenigstens einem Bremszylinder, wobei das Notbremsventil beispielsweise einen festen hydraulischen oder pneumatischen Druck in jedem Bremszylinder erzeugt. Durch die Nachschaltung des Gleitschutzventils ist der Gleitschutz auch bei der Sicherheitsbremsung aktiv. Ferner ist mittels der nachgeschalteten Gleitschutzventile und der Steuerungseinheit eine Ruckbegrenzung bereitgestellt.

Vorteilhafterweise ist das Notbremsventil mit einem separaten Notbremsvorratsbehälter druckdicht verbunden. Auf diese Weise ist die Versorgung des Notbremsventils mit Bremsfluid unabhängig von der Versorgung der Betriebsbremse.

Vorteilhafterweise ist das Notbremsventil zwischen dem Bremsventil und dem Gleitschutzventil angeordnet, wobei das Bremsventil mittels eines mit dem Notbremsventil und dem Vorratsbehälter verbundenen Paralleldruckleitungszweig überbrückbar ist. Durch die Überbrückung des Bremsventils kann bei Ausfall desselben eine Sicherheitsbremsung durchgeführt werden. Selbstverständlich kann das Notbremsventil auch gemäß dieser vorteilhaften Weiterentwicklung mit dem Notbremsvorratsbehälter verbunden sein.

Vorteilhafterweise ist das Fluid Luft. Atmosphärische Luft ist kostengünstig verfügbar. Abweichend davon ist das Fluid eine hydraulische Flüssigkeit, so dass eine hydraulische Bremse bereitgestellt ist.

Vorteilhafterweise ist der Vorratsbehälter über ein Rückschlagventil mit einem Hauptvorratsbehälter verbunden. Der Hauptvorratsbehälter dient beispielsweise zur Versorgung eines gesamten Zuges, der aus mehreren Wagen besteht, mit Druckluft. Dabei weist beispielsweise jeder Wagen seinen eigenen Vorratsbehälter auf. Für den gesamten Zug oder für mehrere Wagen als Wagengruppe ist wiederum ein Hauptvorratsbehälter vorgesehen.

Gemäß einer zweckmäßigen Weiterentwicklung des erfindungsgemäßen Verfahrens stellt die Steuerungseinheit die Ruckbegrenzung mittels eines Gleitschutzventils bereit.

Vorteilhafterweise wird zur Ruckbegrenzung der Druck in jedem Bremszylinder rampenförmig auf- oder abgebaut. Auf diese Art und Weise ist bei einer einfachen Ansteuerung der Steuerung eine wirksame Ruckbegrenzung bereitgestellt. Darüber hinaus ist ein unzulässig langes Entlüften von Stellgliedern wie Bremszylindern vermieden.

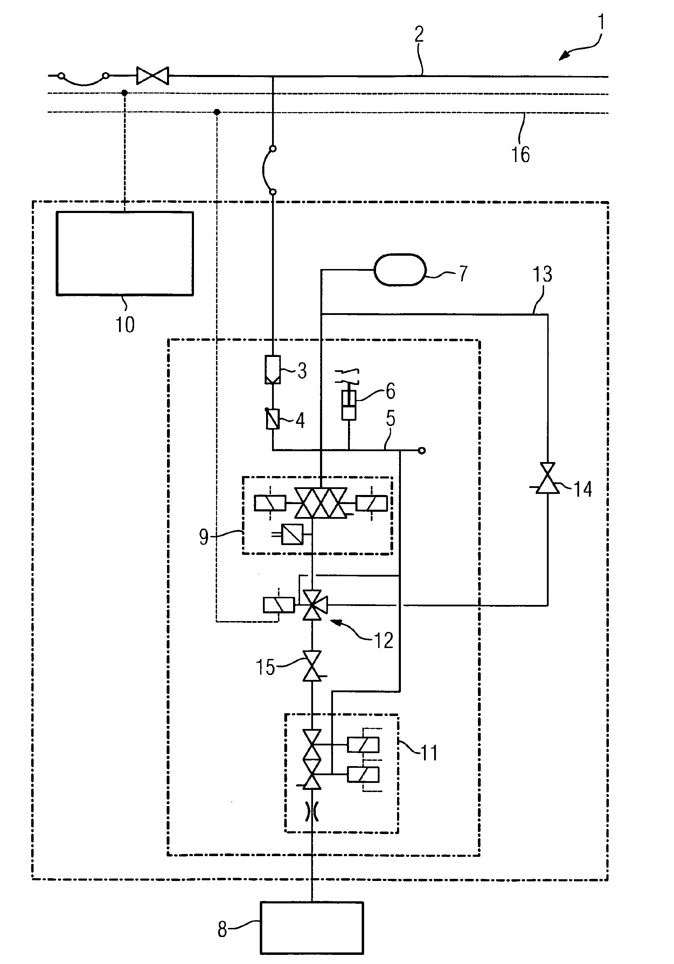

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei die
- Figur: ein Ausführungsbeispiel der erfindungsgemäßen Bremseinrichtung schematisch verdeutlicht.

Die Figur verdeutlicht ein Ausführungsbeispiel der erfindungsgemäßen Bremseinrichtung 1 schematisch. Die dort gezeigte Bremseinrichtung 1 verfügt über eine Hauptvorratsleitung 2, die sich durch ein aus mehreren Wagons bestehendes schienengeführtes Fahrzeug hindurch erstreckt. Dabei weist die Hauptvorratsleitung 2 einen Hauptvorratsbehälter auf, der figürlich nicht dargestellt ist. Die Hauptvorratsleitung 2 ist über ein Luftfilter 3 und ein Rückschlagventil 4 mit einer Druckleitung 5 verbunden. Zum Messen des Druckes in der Druckleitung 5 dient ein Druckschalter 6. Darüber hinaus ist die Druckleitung 5 mit einem Vorratsbehälter 7 verbunden, der bei Ausfall der Hauptdruckluftversorgung die zum Bremsen notwendige Druckluft bereitstellt. Dabei kommuniziert der Vorratsbehälter 7 mit wenigstens einem Bremszylinder 8, der in der Figur nur schematisch dargestellt ist. Der Bremszylinder 8 umfasst hier eine Druckluftkammer, die von einer beweglichen Begrenzungswand, wie beispielsweise einem Kolben, begrenzt ist. Bei Druckerhöhung in der Druckluftkammer kommt es zur Verschiebung der beweglichen Begrenzungswand, die wiederum über eine zweckmäßige Hebelmechanik mit Bremsbelägen verbunden ist. Die Bremsbeläge werden auf diese Weise gegen Bremsscheiben gepresst, die drehfest mit einer Radachse des Schienenfahrzeuges verbunden sind. Durch das Anpressen der Bremsbeläge an die Radscheibe kommt es zum Reibschluss und somit zu einem Abbremsen des Schienenfahrzeuges. Dabei ist die Verzögerungskraft der Bremsung vom Druck in der Druckluftkammer des Bremszylinders abhängig. Je höher der Druck des Bremszylinders ist, desto höher ist die Verzögerungskraft des schienengeführten Fahrzeuges.

Um den Druck im Bremszylinder 8 flexibel einstellen zu können, kommuniziert der Vorratsbehälter 7 über ein Bremsventil 9 mit dem Bremszylinder 8. Im gezeigten Ausführungsbeispiel ist das Bremsventil 9 ein dem Fachmann bestens bekanntes Proportionalventil, an dessen Eingang der im Vorratsbehälter 7 herrschende Druck anliegt. Der Druck am Ausgang des Bremsventils 9 kann von einer Steuerungseinheit 10 kontinuierlich eingestellt werden kann. Hierzu ist die Steuerungseinheit 10 elektrisch mit dem Bremsventil 9 sowie mit einem Drucksensor zum Erfassen des Istdruckes am Ausgang des Bremsventils 9 unter Gewinnung von Ausgangsdruckwerten verbunden. Die Ausgangsdruckwerte werden an die Steuerungseinheit 10 übertragen. Die Steuerungseinheit 10 vergleicht die Ausgangsdruckwerte mit einem vorgegebenen Sollwert und erzeugt mittels eines Reglers eine Differenz dieser Größen entsprechende Spannungsänderung ΔU. Diese Spannungsänderung ΔU wird an das Bremsventil 9 weitergeleitet, das für eine der Spannungsänderung ΔU entsprechende Druckänderung Δp an seinem Ausgang sorgt.

Insbesondere bei Schienenfahrzeugen ist der Reibwert zwischen Rad und Schiene so gering, dass es häufig zu einem Blockieren der Räder beim Bremsvorgang kommt. Zur Vermeidung dieses Gleitens des Schienenfahrzeuges auf den Schienen ist ein Gleitschutzventil 11 vorgesehen, das zwischen dem Bremszylinder 8 und dem Bremsventil 9 angeordnet ist. Das Gleitschutzventil 11 ist ebenfalls elektronisch mit der Steuerungseinheit 10 verbunden, die eine Gleitschutzsteuerung umfasst. Eine Gleitschutzsteuerung und Gleitschutzventile sind dem Fachmann bestens bekannt, so dass hierauf an dieser Stelle nicht detailliert eingegangen zu werden braucht. Im Rahmen der Erfindung stellt das Gleitschutzventil 11 zusammen mit der Steuerungseinheit 10 auch eine Ruckbegrenzung, und zwar sowohl beim Anfahren des Schienenfahrzeuges als auch beim Abbremsen kurz vor Stillstand des Schienenfahrzeuges, bereit. Dies erfolgt dadurch, dass der Druck im Bremszylinder 14 durch das Gleitschutzventil 11 beim Einleiten der Bremsung rampenförmig erhöht wird. Dabei bedeutet rampenförmig, dass durch eine pulsweitenmodulierte Ansteuerung des Gleitschutzventils ein allmählich ansteigender beziehungsweise allmählich absinkender Druck im Bremszylinder 8 erzeugt wird. Eine pulsweitenmodulierte Ansteuerung ist dem Grunde nach bekannt, so dass an dieser Stelle hierauf nicht mehr eingegangen zu werden braucht. Eine pulsweitenmodulierte Ansteuerung ist jedoch nur beispielhaft genannt. Im Rahmen der Erfindung können auch andere Ansteuerungen eingesetzt werden, so lange der gewünschte rampenförmige Aufbau und somit eine Ruckbegrenzung herbeigeführt ist.

Eine Sicherheitsbremse umfasst ein Notbremsventil 12, das elektrisch mit der Steuerungseinheit 10 verbunden ist. Darüber hinaus kommuniziert das Notbremsventil 12 über einen Paralleldruckleitungszweig 13 mit dem Vorratsbehälter 7. Dabei dient ein Druckminderventil 14 zum Einstellen eines fest vorgegebenen Sicherheitsbremsdruckes in der Druckluftleitung 5, in der ferner ein Absperrhahn 15 angeordnet ist. Das Notbremsventil 12 ist nicht unmittelbar, sondern nur mittelbar über eine Sicherheitsschleife 16 mit der Steuerungseinheit 10 verbunden. Im Fehlerfall, also bei Ausfall der Betriebsbremse, beispielsweise des Bremsventils 9, kommt es zur Unterbrechung der besagten Sicherheitsschleife 16 und somit zum Auslösen des Notbremsventils 12. Ohne das zwischen dem Notbremsventil 12 und dem Bremszylinder 8 angeordnete Gleitschutzventil 11 würde sich der durch das Druckminderventil 14 bereitgestellte Druck auch im Bremszylinder 8 einstellen. Das Gleitschutzventil 11 sorgt jedoch zusammen mit der Steuerungseinheit 10, die eine Ruckbegrenzungssteuerung umfasst, auch bei der Sicherheitsbremsung für einen rampenförmigen, also allmählichen Druckaufbau beziehungsweise Druckabbau im Bremszylinder 8, so dass eine Ruckbegrenzung bereitgestellt ist.

Abschließend sei angemerkt, dass die Bremssteuerung beispielsweise durch einen sicherheitsgeprüften Rechner bereitgestellt wird.

Bei einem weiteren Ausführungsbeispiel kann der Rechner redundant ausgelegt sein und würde dann einen zweiten Rechner mit einer Steuerung aufweisen, welche über die gleichen Eigenschaften wie die Steuerungseinheit 10 verfügt. Bei Ausfall des einen Rechners übernimmt der zweite Rechner die Aufgaben des ausgefallenen Rechners. Die redundante Auslegung von Rechnern ist dem Fachmann jedoch bekannt, so dass an dieser Stelle hierauf nicht genau eingegangen zu werden braucht. Die hohen Sicherheitsanforderungen an die elektronische Steuerung der Sicherheitsbremse werden jedoch auf diese Weise erfüllt.

## Patentansprüche

1. Bremseinrichtung (1) mit einer Betriebsbremse (8,9) zum Abbremsen eines Schienenfahrzeuges im Normalbetrieb und einer Sicherheitsbremse zum Abbremsen des Schienenfahrzeuges bei Ausfall der Betriebsbremse (8,9), wobei eine mit der Betriebsbremse (8,9) verbundene Steuerungseinheit (10) eine Ruckbegrenzung bereitstellt,
**dadurch gekennzeichnet, dass** die Steuerungseinheit (10) mit der Sicherheitsbremse so gekoppelt ist, dass auch bei einem durch die Sicherheitsbremse ausgelösten Abbremsen eine Ruckbegrenzung bereitgestellt ist.

2. Bremseinrichtung (1) nach Anspruch 1,
**dadurch gekennzeichnet, dass** die Steuerungseinheit (10) mit einem Gleitschutzventil (11) verbunden ist, wobei die Ruckbegrenzung mittels des Gleitschutzventils (11) bereitgestellt ist.

3. Bremseinrichtung (1) nach Anspruch 2, **gekennzeichnet durch**
- einen mit einem Fluid befüllbaren Vorratsbehälter (7), der mittels einer Druckleitung (5) mit einem Bremszylinder (8) zum Andrücken von Bremsbelägen an eine Bremsfläche kommuniziert, die drehfest mit einer Radachse des Schienenfahrzeuges verbunden ist,
- ein mit der Druckleitung (5) und mit der Steuerungseinheit (10) verbundenes Bremsventil (9) zum Erzeugen eines von der Steuerungseinheit (10) vorgegebenen Bremsdruckes und,
- ein mit der Steuerungseinheit (10) verbundenes Notbremsventil (12), wobei das Gleitschutzventil (11) zwischen dem Notbremsventil (12) und dem Bremszylinder (8) angeordnet ist.

4. Bremseinrichtung (1) nach Anspruch 3,
**dadurch gekennzeichnet, dass** das Notbremsventil (12) mit einem separaten Notbremsvorratsbehälter druckdicht verbunden ist.

5. Bremseinrichtung (1) nach Anspruch 3,
**dadurch, gekennzeichnet, dass** das Notbremsventil (12) zwischen dem Bremsventil (9) und dem Gleitschutzventil (11) angeordnet ist, wobei das Bremsventil (9) mittels eines mit dem Notbremsventil (12) und dem Vorratsbehälter (7) verbundenen Paralleldruckleitungszweig (13) überbrückbar ist.

6. Bremseinrichtung (1) nach einem der vorhergehenden Ansprüche,
**dadurch gekennzeichnet, dass** das Fluid Luft ist.

7. Bremseinrichtung (1) nach einem der vorhergehenden Ansprüche,
**dadurch gekennzeichnet, dass** der Vorratsbehälter (7) über ein Rückschlagventil (4) mit einem Hauptvorratsbehälter (2) verbunden ist.

8. Verfahren zum Bremsen eines Schienenfahrzeuges, bei dem der Ausfall einer Betriebsbremse (9,10) von einer Steuerungseinheit (10) festgestellt wird und eine Sicherheitsbremse (10,12) anschließend eine Sicherheitsbremsung durchführt, **dadurch gekennzeichnet, dass** die Steuerungseinheit (10) auch bei der Sicherheitsbremsung eine Ruckbegrenzung bereitstellt.

9. Verfahren nach Anspruch 8,
**dadurch gekennzeichnet, dass** die Steuerungseinheit (10) die Ruckbegrenzung mittels eines Gleitschutzventils (11) bereitstellt.

10. Verfahren nach Anspruch 8 oder 9,
**dadurch gekennzeichnet, dass** zur Ruckbegrenzung der Druck in einem Bremszylinder (8) rampenförmig auf- oder abgebaut wird.

## Claims

1. Brake device (1) with a service brake (8, 9) for braking a rail vehicle during normal operation and a safety brake for braking the rail vehicle should the service brake (8, 9) fail, wherein a control unit (10) which is connected to the service brake (8, 9) provides a jolt limitation, **characterized in that** the control unit (10) is coupled to the safety brake in such a manner that a jolt limitation is provided even during a braking triggered by the safety brake.

2. Brake device (1) according to Claim 1, **characterized in that** the control unit (10) is connected to an anti-skid valve (11), with the jolt limitation being provided by means of the anti-skid valve (11).

3. Brake device (1) according to Claim 2, **characterized by**
- a reservoir (7) which can be filled with a fluid and communicates by means of a pressure line (5) with a brake cylinder (8) for pressing brake pads onto a brake surface which is connected in a rotationally fixed manner to a wheel axle of the rail vehicle,
- a brake valve (9) which is connected to the pressure line (5) and to the control unit (10) and is intended for generating a braking pressure which is predetermined by the control unit (10), and
- an emergency brake valve (12) which is connected to the control unit (10), with the anti-skid valve (11) being arranged between the emergency brake valve (12) and the brake cylinder (8).

4. Brake device (1) according to Claim 3, **characterized in that** the emergency brake valve (12) is connected in a pressuretight manner to a separate emergency brake reservoir.

5. Brake device (1) according to Claim 3, **characterized in that** the emergency brake valve (12) is arranged between the brake valve (9) and the anti-skid valve (11), with it being possible for the brake valve (9) to be bridged by means of a parallel pressure line branch (13) connected to the emergency brake valve (12) and the reservoir (7).

6. Brake device (1) according to one of the preceding claims, **characterized in that** the fluid is air.

7. Brake device (1) according to one of the preceding claims, **characterized in that** the reservoir (7) is connected to a main reservoir (2) via a nonreturn valve (4).

8. Method for braking a rail vehicle, in which the failure of a service brake (9, 10) is established by a control unit (10) and a safety brake (10, 12) subsequently carries out a safety braking operation, **characterized in that** the control unit (10) provides a jolt limitation even during the safety braking operation.

9. Method according to Claim 8, **characterized in that** the control unit (10) provides the jolt limitation by means of an anti-skid valve (11).

10. Method according to Claim 8 or 9, **characterized in that**, for the jolt limitation, the pressure is built up or dissipated in a ramp-shaped manner in a brake cylinder (8).

## Revendications

1. Dispositif ( 1 ) de freinage comprenant un frein ( 8, 9 ) de service pour freiner un véhicule ferroviaire en service normal et un frein de sécurité pour freiner le véhicule ferroviaire lorsque le frein ( 8, 9 ) de service est défaillant, une unité ( 10 ) de commande reliée au frein ( 8, 9 ) de service procurant une limitation des à-coups, **caractérisé en ce que**
l'unité ( 10 ) de commande est couplée au frein de sécurité,
de manière à procurer une limitation des à-coups, même lors d'un freinage déclenché par le frein de sécurité.

2. Dispositif ( 1 ) de freinage suivant la revendication 1, **caractérisé en ce que**
l'unité ( 10 ) de commande est reliée à une vanne ( 11 ) d'anti-patinage, la limitation des à-coups étant procurée au moyen de la vanne ( 11 ) d'anti-patinage.

3. Dispositif ( 1 ) de freinage suivant la revendication 2, **caractérisé par**
- un réservoir ( 7 ) qui peut être rempli d'un fluide et qui communique, au moyen d'un conduit ( 5 ) sous pression, avec un cylindre ( 8 ) de frein pour appliquer des garnitures de frein à une surface de frein, qui est solidaire en rotation d'un essieu de roue du véhicule ferroviaire,
- une vanne ( 9 ) de frein, reliée au conduit ( 5 ) sous pression et à l'unité ( 10 ) de commande, pour la production d'une pression de freinage prescrite par l'unité ( 10 ) de commande et,
- une vanne ( 12 ) de frein d'urgence reliée à l'unité ( 10 ) de commande, la vanne ( 11 ) d'anti-patinage étant interposée entre la vanne ( 12 ) de frein d'urgence et le cylindre ( 8 ) de frein.

4. Dispositif ( 1 ) de freinage suivant la revendication 3, **caractérisé en ce que**
la vanne ( 12 ) de frein d'urgence est reliée d'une manière étanche à la pression à un réservoir distinct de frein d'urgence.

5. Dispositif ( 1 ) de freinage suivant la revendication 3, **caractérisé en ce que**
la vanne ( 12 ) de frein d'urgence est interposée entre la vanne ( 9 ) de frein et la vanne ( 11 ) d'anti-patinage, la vanne ( 9 ) de frein pouvant être court-circuitée, au moyen d'une branche ( 13 ) en parallèle de conduit sous pression, reliée à la vanne ( 12 ) de frein d'urgence et au réservoir ( 7 ) .

6. Dispositif ( 1 ) de freinage suivant l'une des revendications précédentes,
**caractérisé en ce que**
le fluide est de l'air.

7. Dispositif ( 1 ) de freinage suivant l'une des revendications précédentes,
**caractérisé en ce que**
le réservoir ( 7 ) est relié à un réservoir ( 2 ) principal par un clapet ( 4 ) anti-retour.

8. Procédé de freinage d'un véhicule ferroviaire, dans lequel on constate la défaillance d'un frein ( 9, 10 ) de service par un dispositif ( 10 ) de commande et un frein ( 10, 12 ) de sécurité effectue ensuite un freinage de sécurité,
**caractérisé en ce que**
l'unité ( 10 ) de commande procure aussi une limitation des à-coups lors du freinage de sécurité.

9. Procédé suivant la revendication 8,
**caractérisé en ce que**
l'unité ( 10 ) de commande procure la limitation des à-coups au moyen d'une vanne ( 11 ) d'anti-patinage.

10. Procédé suivant la revendication 8 ou 9,
**caractérisé en ce que**
pour la limitation des à-coups, on forme ou on supprime en forme de rampe la pression dans un cylindre ( 8 ) de frein.
